# EUROPÄISCHE PATENTSCHRIFT

(11) **EP 3 824 783 B1**
(45) Veröffentlichungstag und Bekanntmachung des Hinweises auf die Patenterteilung: **20.11.2024**
(21) Anmeldenummer: 20199980.2
(22) Anmeldetag: 05.10.2020
(51) Int. Cl.: A47L 9/14, B01D 39/16, B01D 39/18

(54) **STAUBSAUGERBEUTEL UND VERFAHREN ZUR HERSTELLUNG EINES STAUBSAUGERBEUTELS**
VACUUM CLEANER BAG AND METHOD FOR MANUFACTURING SAME
SAC D'ASPIRATEUR ET PROCÉDÉ DE FABRICATION D'UN SAC D'ASPIRATEUR

(30) Priorität: 20.11.2019 DE 102019131364
(43) Veröffentlichungstag der Anmeldung: 26.05.2021
(73) Patentinhaber: Wolf PVG GmbH & Co. KG, 32427 Minden (DE)
(72) Erfinder: CZADO, Wolfgang, 32457 Porta Westfalica (DE); VORFELD, Udo, 32051 Herford (DE)
(74) Vertreter: Dantz, Jan Henning

(56) Entgegenhaltungen:
- EP-A1- 0 338 479
- EP-A2- 0 960 645
- EP-B1- 0 338 479
- EP-B1- 0 960 645
- EP-B1- 0 974 387
- DE-A1- 19 924 435
- JP-A- H04 307 020

## Beschreibung

Die vorliegende Erfindung betrifft einen Staubsaugerbeutel mit einem luftdurchlässigen Filtermaterial, das einen Innenraum umgibt und über eine Einströmöffnung mit einem Strömungskanal eines Staubsaugers verbindbar ist, wobei das Filtermaterial mehrere Lagen aufweist, von denen mindestens eine Lage ein Vliesstoff ist, und ein Verfahren zur Herstellung eines Staubsaugerbeutels.

Einfache Staubsaugerbeutel werden meist aus einem Filtermaterial aus einem dreilagigen Verbund hergestellt, bei dem zwischen zwei Lagen aus Spunbond eine Lage aus Meltblown angeordnet wird. Hochwertigere und somit saugleistungskonstantere Staubsaugerbeutel weisen darüber hinaus eine Vorfilterlage auf, die als Grobfilter dient und meist aus einem Krempelvlies oder einer Airlaid-Lage hergestellt ist. Bei der Herstellung der einzelnen Lagen kommen meist neue Kunststoffe, wie aus reinen Rohstoffen hergestellte Fasern oder Naturstoffe, wie Zellulosefasern, zum Einsatz.

Die US 2009/0223190 A1 offenbart ein Filtermaterial, bei dem aus Textilien gewonnene Fasern als rezyklierte Fasern verwendet werden. Diese rezyklierten Fasern werden geschnitten und über ein Klebemittel miteinander verbunden. Der Einsatz von rezyklierten Fasern aus Textilien verringert zwar den Rohstoffbedarf bei der Herstellung eines Filtermaterials, allerdings wirkt sich der Einsatz von Klebemittel nachteilig auf die Nachhaltigkeit aus. Zudem lässt sich die Lage mit den rezyklierten Fasern häufig nicht in der gewünschten Homogenität herstellen, was die Filtereffizienz reduziert.

EP 0 338 479 A1 offenbart einen Staubfilterbeutel, der eine Filterpapieraußenlage und ein innenliegendes Vlies als Feinfaservlies aufweist, um Stäube mit einer Partikelgröße von >/= 0,1 µm filtern zu können.

In der EP 0 960 645 A2 ist ein Staubsaugerbeutel offenbart, der aus mehreren Lagen hergestellt ist und mindestens einen Feinfilter und einen Grobfilter aufweist. Als Grobfilter können auch trockengelegte Vliesstoffe eingesetzt werden.

DE 199 24 435 A1 offenbart einen Filter aus Filterpapier oder papierartigem Vliesstoff, mittels dem eine Filtration wässriger Medien für unerwünschte Fremd- oder Begleitstoffe, wie Härtebildner oder Schwermetalle, erreicht werden soll.

JP H04 307020 A offenbart einen Staubsaugerbeutel aus Filterpapier, bei dem teilweise rezyklierte Fasern eingesetzt werden.

Es ist daher Aufgabe der vorliegenden Erfindung, einen Staubsaugerbeutel und ein Verfahren zur Herstellung eines Staubsaugerbeutels zu schaffen, bei dem ein reduzierter Anteil an Rohstoffen eingesetzt wird und die eine hohe Staubabscheideleistung ermöglichen.

Diese Aufgabe wird mit einem Staubsaugerbeutel mit den Merkmalen des Anspruches 1 sowie einem Verfahren zur Herstellung eines Staubsaugerbeutels mit den Merkmalen des Anspruches 10 gelöst.

Der erfindungsgemäße Staubsaugerbeutel umfasst mehrere Lagen, wobei mindestens eine Lage des Filtermaterials Fasern aus zerkleinertem Altpapier oder Altpappe enthält. Die Fasern aus Altpapier oder Altpappe verringern den Bedarf an Rohstoffen zur Herstellung des Staubsaugerbeutels, was die Nachhaltigkeit des Staubsaugerbeutels verbessert. Da es sich bei einem Staubsaugerbeutel ohnehin um ein Wegwerfprodukt handelt, das einer Kompostierung wegen der in dem Staubsaugerbeutel gesammelten Schmutzpartikel nicht zugänglich ist, verbessert sich die Umweltbilanz durch den Einsatz von Fasern aus zerkleinertem Altpapier oder Altpappe. Als Fasern werden auch Bruchstücke aus zusammenhängenden Fasern angesehen, die beim Shreddern nicht vollständig voneinander getrennt werden müssen.

Vorzugsweise liegt der Anteil an Fasern aus zerkleinertem Altpapier in der Lage zwischen 30 Gew.-% bis 95 Gew.-%, insbesondere zwischen 50 Gew.-% bis 90 Gew.-%. Der überwiegende Anteil der Lage besteht somit bevorzugt aus Fasern aus zerkleinertem Altpapier oder Altpappe.

Die Lage mit Fasern aus zerkleinertem Altpapier oder Altpappe enthält vorzugsweis zusätzlich schmelzbare Bindefasern. Der Anteil an schmelzbaren Bindefasern kann in einem Gewichtsanteil zwischen 10 % bis 50 %, vorzugsweise 15 % bis 30 %, betragen. Als Bindefasern können beispielsweise thermoplastische Fasern aus Polypropylen oder PES eingesetzt werden, aber auch Bikomponentenfasern aus Polypropylen/Polyethylen oder PES/CO-PES.

Die Fasern aus zerkleinertem Altpapier oder Altpappe und die Bindefasern können im Airlaid-Verfahren auf eine Trägerlage abgelegt werden. Bevorzugt werden die zwei oder mehr Lagen nachfolgend kalandriert und über Schweißpunkte aneinander angeheftet.

Alternativ ist es möglich, eine Lage mit Fasern aus zerkleinertem Altpapier oder Altpappe und thermoplastische Bindefasern, im Wetlaidverfahren herzustellen. Durch eine solche Lage mit höherer Festigkeit kann eine Lage eines herkömmlichen Spunbondmaterials ersetzt werden.

Die Fasern aus zerkleinertem Altpapier besitzen vorzugsweise eine Länge kleiner 4 mm, insbesondere kleiner 2,5 mm.

In einer bevorzugten Ausgestaltung weist die Lage mit Fasern aus zerkleinertem Altpapier oder Altpappe auch nicht rezyklierte Zellulosefasern auf. Der Anteil an nicht rezyklierten Zellulosefasern kann beispielsweise zwischen 5 bis 25 Gew.-% betragen. Durch die nicht rezyklierten Zellulosefasern wird die Lage den Fasern aus zerkleinertem Altpapier oder Altpappe homogenisiert, d.h. die Filtereffizienz kann durch die größere Homogenisierung verbessert werden. Durch die Zufügung von Fasern aus nicht rezyklierter Zellulose kann auch eine höhere Festigkeit, höhere Luftdurchlässigkeit und somit die Staubspeicherfähigkeit erhöht werden.

Die Fasern aus zerkleinertem Altpapier oder Altpappe besitzen vorzugsweise zu mehr als 50 % eine Länge zwischen mehr als 0,5 mm und kleiner 2 mm. Insbesondre ein hoher Anteil sehr kleiner Fasern besitzt den Nachteil, dass dieser die nachfolgenden Filterschichten zusetzen kann als Faserstaub, so dass die Filterleistung reduziert wird.

Das erfindungsgemäße Filtermaterial enthält vorzugsweise mindestens eine Lage Meltblown als Feinfilter, wobei die Lage mit Fasern aus zerkleinertem Altpapier oder Altpappe stromaufwärts als Grobfilter vorgesehen ist. Zwischen dem Feinfilter und dem Grobfilter kann dabei mindestens eine Stützlage aus Spunbond vorgesehen sein.

Bei dem erfindungsgemäßen Verfahren zur Herstellung eines Staubsaugerbeutels wird mindestens eine Lage als Trägerlage bereitgestellt, auf der eine Lage mit Fasern aus zerkleinertem Altpapier oder Altpappe im Airlaid-Verfahren abgelegt wird. Anschließend wird mindestens eine weitere Lage darauf abgelegt und der Staubsaugerbeutel fertiggestellt. Durch den Anteil an Fasern aus zerkleinertem Altpapier oder Altpappe sinkt der Rohstoffbedarf zur Herstellung des Staubsaugerbeutels.

Vorzugsweise werden die Fasern aus zerkleinertem Altpapier oder Altpappe durch Schreddern von Altpapier oder Altpappe hergestellt, wobei kleinere Staubpartikel zumindest teilweise abgesaugt werden. Vorzugsweise werden Staubpartikel kleiner 20 µm in einem Anteil von mindestens 50 % durch Absaugen entfernt, so dass die Fasern aus zerkleinertem Altpapier oder Altpappe beim Ablegen auf die Trägerlage nur einen geringen Anteil von Faserstaub enthalten.

Beim Schreddern des Altpapiers oder der Altpappe beträgt die Restfeuchte des Altpapiers oder der Altpappe vorzugsweise zwischen 2 % bis 8 %, um die Erzeugung von Staubpartikeln zu reduzieren. Versuche der Anmelderin haben gezeigt, dass ein zu geringer Anteil an Restfeuchte zu einer höheren Staubbelastung beim Schreddern führt. Zur Erhöhung der Homogenität der durch Schreddern des Altpapiers oder der Altpappe hergestellten Fasern kann die Restfeuchte entsprechend gesteuert werden.

Vorzugsweise wird in dem Airlaid-Verfahren eine Mischung aus Fasern aus zerkleinertem Altpapier oder Altpappe und Bindefasern abgelegt, die nachfolgend durch Erhitzen der Bindefasern verfestigt wird, beispielsweise in einem Durchlaufofen. Dadurch kann eine homogene und zusammenhängende Lage hergestellt werden, die effizient aus Grobstaubspeicher eingesetzt werden kann.

Nachfolgend wird der Aufbau eines erfindungsgemäßen Filtermaterials für einen Staubsaugerbeutel beispielhaft beschrieben:

### Beispiel 1:

Ein Ausführungsbeispiel eines erfindungsgemäßen Staubsaugerbeutels umfasst ein luftdurchlässiges Filtermaterial aus mehreren Lagen, die folgenden Aufbau besitzen:
- Stützlage außen: Spunbond mit einem Flächengewicht zwischen 10 g/m² bis 100 g/m²
- Feinfilterlage aus Meltblown mit einem Flächengewicht zwischen 10 g/m² bis 50 g/m²
- Stützlage mittig aus Spunbond mit einem Flächengewicht zwischen 10 g/m² bis 60 g/m²
- Grobstaubspeicherlage mit Fasern aus zerkleinertem Altpapier oder Altpappe in einem Gewichtsanteil zwischen 50 % bis 90%, wobei die Fasern eine Länge zwischen 0,5 mm bis 4 mm besitzen und die Lage zudem schmelzbare Bindefasern aus einem thermoplastischen Material in einem Anteil zwischen 10 % bis 40 % enthält
   Als Bindemittelfasern können thermoplastische Fasern aus Polypropylen oder PES eingesetzt werden. Alternativ oder zusätzlich können auch Bikomponentenfasern aus PP/PE oder PES/CO-PES verwendet werden. Optional können auch Zellulosefasern aus nicht rezyklierter Zellulose zugefügt werden, die der Grobstaubspeicherlage eine verbesserte Homogenität verleihen.
- Stützlage aus einem Spunbond mit einem Flächengewicht zwischen 10 g/m²bis 100 g/m²

## Patentansprüche

1. Staubsaugerbeutel mit einem luftdurchlässigen Filtermaterial, das einen Innenraum umgibt und über eine Einströmöffnung mit einem Strömungskanal eines Staubsaugers verbindbar ist, wobei das Filtermaterial mehrere Lagen aufweist, von denen mindestens eine Lage ein Vliesstoff ist, **dadurch gekennzeichnet, dass** mindestens eine Lage des Filtermaterials Fasern aus zerkleinertem Altpapier oder Altpappe enthält.

2. Staubsaugerbeutel nach Anspruch 1, **dadurch gekennzeichnet, dass** der Anteil an Fasern aus zerkleinertem Altpapier oder Altpappe in der Lage zwischen 30 Gew.-% bis 95 Gew.-%, vorzugsweise zwischen 50 Gew.-% und 90 Gew.-%, beträgt.

3. Staubsaugerbeutel nach Anspruch 1 oder 2, **dadurch gekennzeichnet, dass** die Lage mit Fasern aus zerkleinertem Altpapier oder Altpappe schmelzbare Bindefasern enthält.

4. Staubsaugerbeutel nach Anspruch 3, **dadurch gekennzeichnet, dass** der Anteil der schmelzbaren Bindefasern in einem Gewichtsanteil zwischen 10 % bis 50 % vorliegt.

5. Staubsaugerbeutel nach einem der vorhergehenden Ansprüche, **dadurch gekennzeichnet, dass** die Fasern aus zerkleinertem Altpapier oder Altpappe eine Länge < 4 mm, insbesondere < 2 mm, aufweisen.

6. Staubsaugerbeutel nach einem der vorhergehenden Ansprüche, **dadurch gekennzeichnet, dass** die mindestens eine Lage mit Fasern aus zerkleinertem Altpapier oder Altpappe nicht rezyklierte Zellulosefasern enthält, insbesondere in einem Gewichtsanteil zwischen 5 % bis 25 %.

7. Staubsaugerbeutel nach einem der vorhergehenden Ansprüche, **dadurch gekennzeichnet, dass** die Fasern aus zerkleinertem Altpapier oder Altpappe zu mehr als 50 % eine Länge von über 0,5 mm und kleiner 2 mm besitzen.

8. Staubsaugerbeutel nach einem der vorhergehenden Ansprüche, **dadurch gekennzeichnet, dass** das Filtermaterial mindestens eine Lage Meltblown als Feinfilter enthält und die Lage mit Fasern aus zerkleinertem Altpapier oder Altpappe stromaufwärts als Grobfilter vorgesehen ist.

9. Staubsaugerbeutel nach Anspruch 8, **dadurch gekennzeichnet, dass** zwischen dem Feinfilter und dem Grobfilter mindestens eine Stützlage aus einem Spunbond vorgesehen ist.

10. Verfahren zur Herstellung eines Staubsaugerbeutels, mit den folgenden Schritten:
- Bereitstellen mindestens einer Lage aus Vliesstoff als Trägerlage;
- Ablegen einer Lage mit Fasern aus zerkleinertem Altpapier oder Altpappe auf die mindestens eine Trägerlage im Airlaid-Verfahren, und
- Ablegen mindestens einer weiteren Lage und Fertigstellen des Staubsaugerbeutels.

11. Verfahren nach Anspruch 10, **dadurch gekennzeichnet, dass** die Fasern aus zerkleinertem Altpapier oder Altpappe durch Schreddern hergestellt werden, und beim Schreddern kleine Staubpartikel zumindest teilweise abgesaugt werden.

12. Verfahren nach Anspruch 11, **dadurch gekennzeichnet, dass** die Staubpartikel kleiner 20 µm in einem Anteil von mindestens 50 % durch Absaugen entfernt werden.

13. Verfahren nach einem der Ansprüche 10 bis 12, **dadurch gekennzeichnet, dass** eine Mischung aus Fasern aus zerkleinertem Altpapier oder Altpappe und Bindefasern im Airlaid-Verfahren abgelegt wird, die nachfolgend durch Erhitzen der Bindefasern verfestigt werden.

14. Verfahren nach einem der Ansprüche 10 bis 12, **dadurch gekennzeichnet, dass** eine Mischung aus Fasern aus zerkleinertem Altpapier oder Altpappe und Bindefasern im Wetlaid-Verfahren hergestellt werden.

## Claims

1. Vacuum cleaner bag with an air-permeable filter material which surrounds an interior space and can be connected to a flow channel of a vacuum cleaner via an inflow opening, wherein the filter material comprises a plurality of layers, at least one layer of which is a non-woven fabric, **characterised in that** at least one layer of the filter material contains fibres of shredded waste paper or waste cardboard.

2. Vacuum cleaner bag according to claim 1, **characterised in that** the proportion of fibres from shredded waste paper or waste cardboard in the layer is between 30 % by weight and 95 % by weight, preferably between 50 % by weight and 90 % by weight.

3. Vacuum cleaner bag according to claim 1 or 2, **characterised in that** the layer with fibres of shredded waste paper or waste cardboard contains meltable binding fibres.

4. Vacuum cleaner bag according to claim 3, **characterised in that** the proportion of fusible binding fibres is present in a weight share of between 10 % and 50 %.

5. Vacuum cleaner bag according to one of the proceeding claims, **characterised in that** the fibres of shredded waste paper or waste cardboard comprise a length < 4 mm, in particular < 2 mm.

6. Vacuum cleaner bag according to one of the proceeding claims, **characterised in that** the at least one layer with fibres from shredded waste paper or waste cardboard contains non-recycled cellulose fibres, in particular in a weight share of between 5 % and 25 %.

7. Vacuum cleaner bag according to one of the proceeding claims, **characterised in that** more than 50 % of the fibres of shredded waste paper or waste cardboard have a length of more than 0.5 mm and less than 2 mm.

8. Vacuum cleaner bag according to one of the proceeding claims, **characterised in that** the filter material contains at least one layer of meltblown as a fine filter and the layer with fibres of shredded waste paper or waste cardboard is provided upstream as a coarse filter.

9. Vacuum cleaner bag according to claim 8, **characterised in that** at least one support layer made of a spunbond is provided between the fine filter and the coarse filter.

10. Method of manufacturing a vacuum cleaner bag, comprising the following steps:
- Providing at least one layer of non-woven fabric as a carrier layer;
- Depositing a layer of fibres from shredded waste paper or waste cardboard on the at least one carrier layer using the airlaid method, and
- Place at least one more layer and finish the vacuum cleaner bag.

11. Method according to claim 10, **characterised in that** the fibres are produced from shredded waste paper or waste cardboard by shredding, and small dust particles are at least partially extracted during shredding.

12. Method according to claim 11, **characterised in that** the dust particles smaller than 20 µm are removed in a proportion of at least 50 % by suction.

13. Method according to one of claims 10 to 12, **characterised in that** a mixture of fibres of shredded waste paper or waste cardboard and binding fibres is deposited in an airlaid process, which are subsequently solidified by heating the binding fibres.

14. Method according to one of claims 10 to 12, **characterised in that** a mixture of fibres from shredded waste paper or waste cardboard and binding fibres is produced in a wetlaid process.

## Revendications

1. Sac d'aspirateur en une matière filtrante perméable à l'air, entourant un volume intérieur et qui peut être relié par un orifice d'entrée à un canal de passage d'un aspirateur, la matière filtrante ayant plusieurs couches dont au moins une couche est un non-tissé,
sac **caractérisé en ce que**
au moins une couche de matière filtrante contient des fibres provenant de vieux papiers ou de vieux cartons broyés.

2. Sac d'aspirateur selon la revendication 1,
**caractérisé en ce que**
la teneur pondérale en fibre de vieux papiers ou de vieux cartons broyés dans la couche est comprise entre 30% - 95% pondéraux, de préférence entre 50% et 90%.

3. Sac d'aspirateur selon la revendication 1 ou 2,
**caractérisé en ce que**
la couche avec des fibres de vieux papiers ou de vieux cartons broyés contient des fibres liantes fusibles.

4. Sac d'aspirateur selon la revendication 3,
**caractérisé en ce que**
la teneur en fibres liantes fusibles correspond à une teneur pondérale comprise entre 10% et 50%.

5. Sac d'aspirateur selon l'une des revendications précédentes,
**caractérisé en ce que**
les fibres de vieux papiers ou de vieux cartons broyés ont une longueur < 4 mm et notamment < 2 mm.

6. Sac d'aspirateur selon l'une des revendications précédentes,
**caractérisé en ce que**
au moins une couche de fibres de vieux papiers ou de vieux cartons broyés contient des fibres de cellulose non recyclées notamment selon une teneur pondérale comprise entre 5% à 25 %.

7. Sac d'aspirateur selon l'une des revendications précédentes,
**caractérisé en ce que**
les fibres de vieux papiers ou vieux cartons broyés ont pour plus de 50% une longueur supérieure à 0,5 et inférieure à 2 mm.

8. Sac d'aspirateur selon l'une des revendications précédentes,
**caractérisé en ce que**
la matière filtrante contient au moins une couche de matière fondue-soufflée comme filtre fin et la couche de fibres de vieux papiers ou de vieux cartons broyés est en amont comme filtre grossier.

9. Sac d'aspirateur selon la revendication 8,
**caractérisé par**
au moins une couche d'appui non-tissé spunbond entre le filtre fin et le filtre grossier.

10. Procédé de fabrication d'un sac d'aspirateur comprenant les étapes suivantes, consistant à :
- fournir au moins une couche en un non-tissé comme couche de support,
- déposer une couche de fibres de vieux papiers ou de vieux cartons broyés sur cette couche de support, selon un procédé de dépôt pneumatique et,
- déposer au moins une autre couche et terminer le sac d'aspirateur.

11. Procédé selon la revendication 10,
**caractérisé en ce que**
on réalise les fibres en vieux papiers ou vieux cartons broyés et au broyage aspire au moins en partie les petites particules de poussières.

12. Procédé selon la revendication 11,
**caractérisé en ce que**
on élimine par aspiration dans une proportion d'au moins 50% les particules de poussières inférieures à 20 µm .

13. Procédé selon l'une des revendications 10 à 12,
**caractérisé en ce que**
on dépose un mélange de fibres de vieux papiers ou de vieux cartons broyés et de fibres liantes par un procédé de dépôt pneumatique, que l'on renforce ensuite par chauffage des fibres liantes.

14. Procédé selon l'une des revendications 10 à 12,
**caractérisé en ce que**
on réalise un mélange de fibres de vieux papiers ou de vieux cartons broyés et de fibres liantes par un procédé de dépôt par voie humide.
